# EUROPEAN PATENT SPECIFICATION

(11) **EP 3 270 709 B1**
(45) Date of publication and mention of the grant of the patent: **08.05.2019**
(21) Application number: 16714252.0
(22) Date of filing: 15.03.2016
(51) Int. Cl.: A23L 3/3418, B65D 77/22, B65D 81/20, B65B 1/04

(54) **PACKAGING METHOD USING DRY ICE SNOW**
VERPACKUNGSVERFAHREN UNTER VERWENDUNG VON TROCKENEISSCHNEE
PROCÉDÉ DE CONDITIONNEMENT AU MOYEN DE NEIGE CARBONIQUE

(30) Priority: 17.03.2015 NO 20150338
(43) Date of publication of application: 24.01.2018
(73) Proprietor: Praxair Norge AS, 0123 Oslo (NO)
(72) Inventor: SPANGELO, Åse, N-3960 Stathelle (NO)
(74) Representative: BRP Renaud & Partner mbB Rechtsanwälte Patentanwälte Steuerberater
(86) International application number: PCT/EP2016/055535
(87) International publication number: WO 2016/146623

(56) References cited:
- EP-A2- 0 174 559
- US-A- 5 731 023
- US-A- 6 023 915
- US-A1- 2011 318 460
- US-A1- 2014 007 546
- JOSEPH H. HOTCHKISS ET AL: "Addition of Carbon Dioxide to Dairy Products to Improve Quality: A Comprehensive Review", COMPREHENSIVE REVIEWS IN FOOD SCIENCE AND FOOD SAFETY, vol. 5, no. 4, 1 September 2006 (2006-09-01), pages 158-168, XP55071687, ISSN: 1541-4337, DOI: 10.1111/j.1541-4337.2006.00008.x
- M. Sivertsvik: "Modified atmosphere packaging" In: Thomas Ohlsson, Nils Bengtsson: "Minimal Processing Technologies in the Food Industries", 1 January 2000 (2000-01-01), CRC Press, Boca Raton, XP002757964, pages 79-80, the whole document

## Description

### Technical Field

The present invention concerns a method for packing food in a modified atmosphere using dry ice as a carbon dioxide source.

### Background

To obtain an increased shelf-life for oxygen sensitive food products, the use of an appropriate method for food packaging is essential. Fresh foods such as various kinds of meat; beef, poultry, fish etc. are commonly preserved by the use of vacuum or a modified atmosphere.

Vacuum packaging provides a food package having a minimal amount of excess space, i.e. the final packaged product has a small total volume.

Modified atmosphere packaging (MAP) is a packaging method, wherein the food product is packed and stored in a modified atmosphere different from air. The food is enclosed by a substantially gas impermeable material, i.e. a material able to contain a modified atmosphere without detrimental leakage of said atmosphere out of the package. The modified atmosphere often contains both CO₂ and N₂. The CO₂ gas is used due to its inhibitory effect on microbiological activity. The N₂ gas is primarily used as an inert filler gas which prevents the MAP-package from collapsing when the CO₂ gas dissolves/migrates into the packed food product. To avoid such a collapse, and increase the shelf life, the common MAP methods require a relatively large gas/food product ratio i.e. a large headspace, and packages obtained from these methods take up a large volume. Headspace is the gas volume around the product inside the packaging. In present MAP packaging, the headspace has to be 3 times the product volume in order to obtain optimal shelf life.

The required headspace may be the largest disadvantage with common MAP methods since it leads to high transportation costs and high amounts of packaging material. If the food product had constituted a higher ratio of the total package volume, the transportation costs would have been significantly lower. In addition, the total volume of packing material would be reduced. A further disadvantage of the present MAP methods is that the packages require much space on the store shelves of Supermarkets.

US 6023915 discloses a modified atmosphere packaging and a method for using said packaging, wherein a piece of solid dry ice may be placed inside the package to provide a CO₂ atmosphere. The solid piece of dry ice is situated beside the food product to be packaged. The atmosphere of the MAP is evacuated through a valve after sealing. The method is time consuming since sublimation of a solid large piece of dry ice is slow.

US 2014/007546 A1 discloses a method and apparatus for obtaining a carbonated food product by use of dry ice.

EP 0174559 A1 discloses a food packaging featuring a valve for releasing carbon dioxide out of the packaging, and a method of packaging food by use of dry ice.

US 5731023 A discloses a method of packaging products susceptible of absorbing carbon dioxide. The method involves adding dry ice to a package containing the product before sealing the package.

The object of the present invention is to provide a packaging method which alleviates at least some of the disadvantages of the prior art methods.

### Summary of the invention

The object of the invention was achieved by using dry ice snow and a packaging comprising at least one one-way valve. The invention is further defined by the attached claims.

In an embodiment of the packaging method, at least the heat seal section comprises a heat sealable polymer film having a sealing temperature range of at least 35 °C and preferably at least 45 °C.

In yet an embodiment of the packaging method, the gas impermeable material comprises a heat sealable polymer film having a sealing temperature range of at least 25 °C, at least 35 °C or at least 45 °C.

In yet an embodiment of the packaging method, at least parts of the gas impermeable material is a heat sealable polymer film having a thickness of at least 65 µm.

In yet an embodiment of the packaging method, the food product is added to the modified atmosphere packaging before or after the dry ice snow.

In yet an embodiment of the packaging method, the modified atmosphere packaging comprises a bottom part and a top part, and the method comprises a step of adding the top part to the bottom part before sealing said packaging. In such embodiments, the gas impermeable material of the bottom part is slightly rigid, while the gas impermeable material of the top part is fully flexible. In other words, step a) is performed by first providing the bottom part (1) before step b) and adding the top part (5) to the bottom part (1) after step b) or c).

In yet an embodiment of the packaging method, the modified atmosphere packaging comprises a sealable bag or sleeve.

In yet an embodiment of the packaging method, the heat sealed modified atmosphere packaging has a headspace volume less than 50 % of the volume of the food product, when excess CO₂ gas has been vented through the at least one one-way valve and/or absorbed into the food product, preferably the headspace volume is less than 40 %, and even more preferred less than 30 %.

In yet an embodiment of the packaging method, the evacuation of gas from the modified atmosphere packaging before heat sealing is performed in a vacuum chamber. In other words, step c) and d) is performed in a vacuum chamber.

In yet an embodiment of the packaging method, the at least one one-way valve opens and allows gas to escape the modified atmosphere packaging, when an internal pressure of the packaging exceeds a given pressure limit, the pressure limit is preferably in the range of 1.5 mbar to 5.0 mbar above the ambient pressure. In other words, the at least one one-way valve has a pressure differential threshold within the range of 1.5-5.0 mbar.

The term "gas impermeable material" is in the context of the present application intended to mean a material which is able to contain a modified atmosphere without detrimental leakage of said atmosphere out of the package during its shelf life. Such materials are well-known to the person skilled in the art of food packaging, and include various types and combinations, such as laminates or composites, of polymers such as PA (polyamide), LDPE (low density polyethylene), OPP (oriented polypropylene) and EVOH (ethylene vinyl alcohol copolymer).

The term "sealing temperature range" is in the present disclosure meant to define the temperature range over which the heat sealable polymer film may be heat sealed to provide a tear seal. Tear seals are known in the art as seals wherein the sealing strength is higher than the adjacent material, i.e. a packaging which is heat sealed with a tear seal must be opened by tearing for instance the adjacent material, contrary to a peel seal, wherein the seal strength is lower than the adjacent material and the seal may be peeled open. A comprehensive review of heat sealing technology is found in for instance Hishinuma, K. and Miyagawa, H: "Heat Sealing Technology and Engineering for Packaging: Principles and Packaging Applications", 2009. In the present invention a tear seal is required to handle the above ambient pressure caused by the CO₂ gas developed inside the MAP. Above the temperature range, the polymer film will over heat and the seal is destroyed, below the temperature range a sufficiently strong seal (i.e. a tear seal) is not formed. The sealing is dependent on a combination of sealing temperature and sealing time, however a long sealing time reduces the capacity to the packaging machine and must be avoided.

The term "heat seal section" is intended to mean a section of the MAP which may be heat sealed to provide a fully sealed MAP. The heat seal section comprises opposing layers or films of a heat sealable polymer having a sealing temperature range as defined above.

### Short description of the drawings

Fig. 1 shows a schematic drawing of an embodiment of the method according to the invention.
Fig. 2 shows an embodiment of a modified atmosphere package suitable for the method shown in fig. 1.
Fig. 3 shows an alternative embodiment of a modified atmosphere package suitable for the method shown in fig. 1.
Fig. 4 shows the comparative results of the method according to the invention and common vacuum packaging.

### Detailed description of embodiments of the invention

The main goal of the present invention is to provide a packaging method which is optimal for the entire value chain. The main purpose of packaging is to contain and protect products, in this case food products. A key measure of effectiveness of a package is its size compared to the volume of the product it encloses. Further, the cost of a package is dependent on the amount of material it requires. Thus, to make a packaging more efficient it should use smaller amounts of material or enclose more product volume.

An optimal packaging uses the least possible amount of material and/or encloses the highest possible product volume. An efficient packaging will provide advantages throughout the whole value chain of food, i.e. primary production, processing, packaging, storage/transport, retail and end customer.

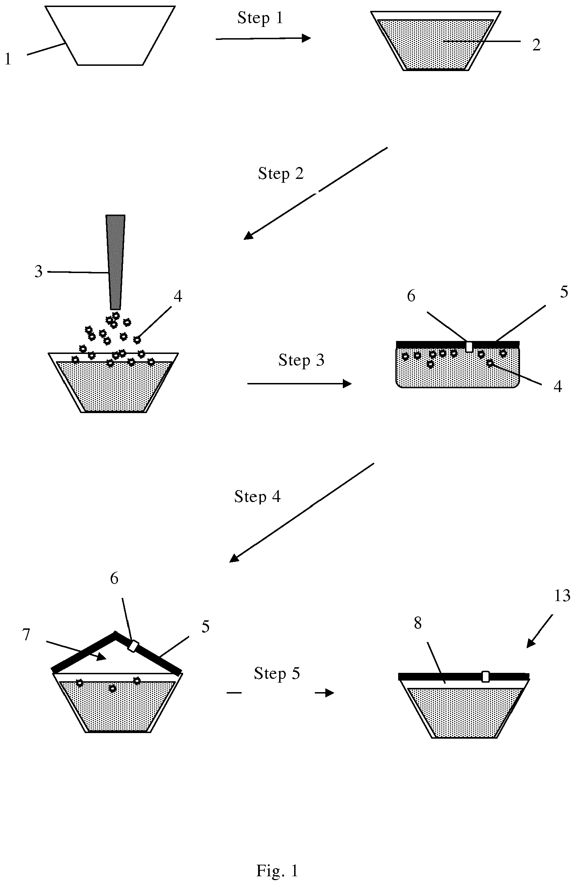

An illustrated flow chart, showing an embodiment of a MAP-method according to the invention, is shown in fig. 1. In this particular embodiment, the method comprises the following steps after an empty tray 1 (or a bottom part of a modified atmosphere package) is provided, for instance on a conveyor line:
Step 1: A suitable quantity of dry ice snow 4 is disposed on the empty tray 1.
   Preferably, the dry ice snow is provided by a "snow horn" 3. A "snow horn" comprises at least one nozzle through which liquid CO₂ is expanded to produce the required dry ice snow.
Step 2: A food product 2, such as minced meat, is disposed within/on the tray 1.
   Optionally, the order of step 1 and 2 is reversed, or said steps are performed simultaneously. The advantage of performing step 1 before step 2 is that possible damage to the valves due to low temperatures is avoided.
Step 3: A lid 5 (or top part), comprising at least one one-way valve 6 is arranged on top of the tray such that the food product 2 is fully enclosed. The lid is a heat sealable polymer film. Gas present inside the packaging formed by the tray 1 and the lid 5 is then evacuated, preferably by placing the packaging inside a vacuum chamber. When the gas is evacuated in a vacuum chamber, the lid may be arranged on top of the tray within the vacuum chamber either after or before evacuation. The lid is then heat sealed to the tray after evacuation. Evacuation of the packaging will provide a modified atmosphere having minimal amounts of oxygen in a short time period, thus increasing the capacity of the packaging machine, and will also minimize the required amount of dry ice snow.
Step 4: The packaging is removed from the vacuum chamber, and the dry ice snow sublimates to CO₂-gas. The above ambient pressure within the packaging is controlled by the at least one one-way valve 6 by venting excess CO₂-gas when said pressure exceeds a set value.
Step 5: A part of the remaining CO₂-gas not vented through the at least one one-way valve is absorbed into the food product until equilibrium or saturation is reached (the solubility of CO₂ in the food product is dependent on multiple factors, such as the temperature and the partial pressure of CO₂).

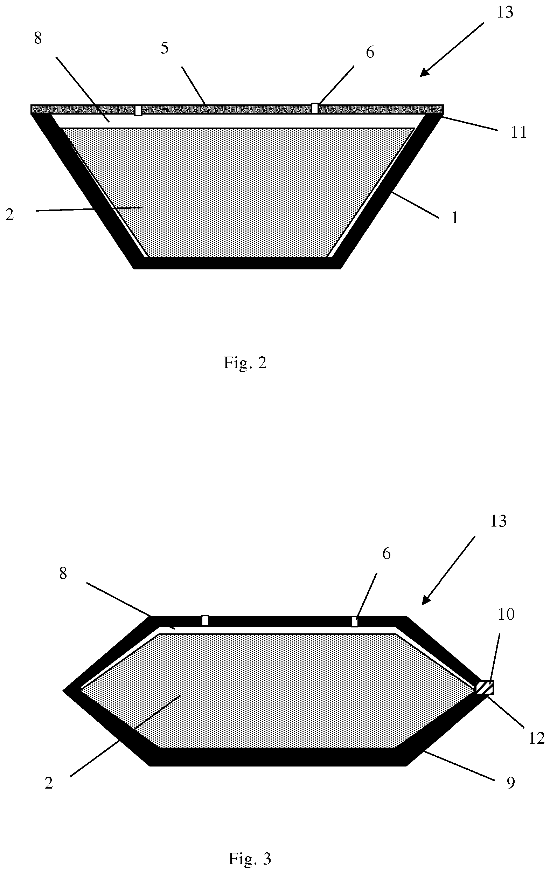

Two embodiments of a packaging suitable for use in the method according to the invention are shown in figs 2 and 3.

The packaging of fig. 2 is similar to the one described in connection with the method of fig. 1. The packaging is here disclosed as it will appear after being filled with a food product 2. The packaging comprises a tray 1 (bottom part) and a lid 5 (top part). The lid is heat sealed to a rim part 11 (i.e. a circumferential area of the lid and the rim part constitutes a heat sealing section of the MAP) of the tray, and features two one-way valves 6 which are able to control the maximum internal pressure in the packaging. These valves are commonly set to open at a pressure differential of 3 mbar, but this threshold may vary according to use. In most instances a single one-way valve is sufficient, but the presence of two (or more) valves may be advantageous in the event of a rapid increase in the gas pressure which may exceed the capacity of a single valve. The latter instance may give rise to a gas pressure in the packaging exceeding its tolerance, thus rupturing the packaging. The internal volume of the packaging is dimensioned to have a small amount of headspace 8.

An alternative packaging is shown in fig. 3. The packaging is here disclosed as it will appear after being filled with a food product 2. In this embodiment the packaging is made up of a single bag 9 instead of a separate tray 1 and lid 5. Similar to the lid of the packaging of fig. 2, the bag features two one-way valves 6 able to control the maximum internal pressure. As in the packaging of fig. 2, a single one-way valve is sufficient in most instances, but the presence of two valves (or more) may be advantageous in that it provides a fail-safe if one of the valves do not release enough CO₂-gas. In the packaging of fig. 3, the bag is sealed 10 along an opening 12 at one end (i.e. at least the opening features a heat sealing section). The internal volume of the packaging is dimensioned to have a small amount of headspace 8.

In yet a further embodiment of a packaging similar to the packaging of fig. 3, the disclosed bag 9, having an opening 12 at one end (the opening comprises a heat sealing section allowing the bag to be heat sealed), is replaced by a sleeve having an opening at both ends, as well as at least one one-way valve. In this embodiment, both openings are heat sealed after the addition of dry ice snow and food product 2. As in the other packaging embodiments the evacuation of gas inside the packaging is performed before the packaging is sealed.

The tray 1, lid 5, bag 9 and sleeve are made up of any suitable gas impermeable material, preferably any synthetic polymer or polymer composite having the required properties for use in food packaging. At least a heat sealing section of the tray, lid, bag and sleeve comprises a polymer film having the required heat sealing properties, i.e. a heat sealing temperature range, or interval, of at least 25 °C as described herein. Such materials are well known to the skilled person. Further, the material of the tray is usually semi-rigid, while the lid, bag and sleeve is fully flexible, such as a suitable polymer film.

In the present application, the term dry ice snow is primarily intended to mean solid dry ice powder obtained by expansion of liquid carbon dioxide without any subsequent compression, i.e. obtained from liquid carbon dioxide which turns to solid when the pressure drops below 5,18 bars. The expansion is done through nozzles having a diameter of about 0.1 mm to about 4.0 mm, preferably about 1,0 mm. The particle sizes/shapes of dry ice snow allow the dry ice to sublimate over a suitably short time period after addition to the modified atmosphere package. Dry ice powder obtained by finely crushing previously compressed dry ice (i.e. obtaining particles of dry ice having a mass median diameter as defined below) is also considered to be comprised by the term dry ice snow. The particles of suitable dry ice snow or powder, or aggregates thereof, have a mass median diameter of less than 1.0 mm, and preferably less than 0.5 mm. To obtain the purpose of the invention it is important to use dry ice as powder or snow instead of larger particles/lumps/nuggets. Dry ice powder/snow sublimates much faster than larger dry ice particles/lumps/nuggets due to the increased surface area. This provides a shorter sublimation time and shorter holding time, both of which are very important for the capacity of the production line and for providing food with a longer shelf life (any residual oxygen will escape faster out of the MAP). In addition, it is easy to provide a consistent amount of powder or snow to each packaging unit. Further, the use of dry ice snow/powder having a short sublimation time is important in avoiding "freeze burning" on the surface of the product. "Freeze burning" is a condition that occurs when food has been damaged by dehydration. Water molecules go directly from solid phase (frozen water on the product surface because of dry ice) to gaseous phase (vapor) without going through a liquid phase. The parts of food now deprived of moisture become dry and shriveled and appear burnt. For the consumer, such appearance is not acceptable.

During the sublimation process both CO₂-gas and air escape from the headspace of the packaging. This is important in order to obtain a low O₂-concentration (< 0,01% O₂) and to get rid of excess CO₂-gas. If the amount of dry ice snow in the packaging is too low, the O₂-concentration will be too high. In that case, the nutrition value, color, water binding capacity of proteins, shelf life and food safety is reduced.

### Experimental part

In a trial run, 400 g of minced meat was added 15 g (V_{CO2} = 15 g x 506 ml at 1,013 bar and 0 °C, 7590 ml) of dry ice snow through a snow horn with phase separator.

Some of the dry ice snow (91 ml CO₂ is dissolved in 0.4 kg of minced meat with pH 5,0 -5,5 and 0 °C, i.e. 0.18 g CO₂ in 400 g minced meat) was dissolved in the minced meat and 30 % (4,5 g, V = 4,5 x 506 = 2277 ml) escaped during the vacuum and sealing process. Remaining dry ice snow was 10.5 g. This amount equates to a volume of 7590 ml - (2277 ml + 91 ml + 167 ml) = 5055 ml. The latter amount goes through the valve during a time period of 24 hours, with most of the gas escaping through the valve(s) in the beginning, i.e. is not evenly distributed per minute.

The machine capacity was 90 units of packaging/minute and there are 9 units of packaging/turn. This equates to 10 turns/minute, wherein each turn takes 6 s, i.e. 4 s for stop and snow filling and 2 s for transportation.

Due to the large amounts of CO₂-gas being vented, the processing line using the method of the invention will require an exhaust system for CO₂-gas. In the present trial run 4.5 g CO₂ snow sublimates from each packaging during the vacuum process, leading to: 2277 ml = 2.3 1 CO₂-gas per packaging. 90 units of packaging/minute; 2.3 1 CO₂-gas ^{∗} 90 = 207 1 gas/minute = 0,2 m³ CO₂-gas /minute.

In the trial run, the over layer film (or lid 5/top part), comprising a one-way valve, is placed over the tray and the vacuum process (evacuation) is performed before sealing of the over layer film to the tray. The packaging is weighed and labelled and placed in a suitable packaging device.

After heat sealing, the packaging will increase in volume. It takes about 10 minutes before all the dry ice snow is sublimated. To avoid rupturing of the packaging due to the large amounts of CO₂-gas produced when the dry ice snow sublimates at least one one-way valve that opens for pressure above ambient is required. In the absence of such a valve, the packaging will rupture when the internal pressure rises above the pressure tolerance level of the packaging. This one-way valve may preferably open at an internal pressure in the packaging of 3 mbar above ambient pressure, and remain closed, or close, at an internal pressure below 3 mbar above ambient pressure.

The final packaging needs one day in a cold-storage chamber before the headspace is reduced. The reduced headspace is caused by the CO₂-gas being dissolved into the food product (167 ml CO₂), which in turn causes a reduction in the internal pressure of the packaging. The dissolution of CO₂-gas into the product is a slow process, and most of the CO₂-gas escapes through the one-way valves.

It is important that the headspace is not too small because then the packaging will collapse, i.e. the food product will come into close contact with the packaging material. Such contact between product and packaging material will give discoloration of the product, i.e. red meat will become brown or grey.

The effect of MAP on the shelf life is mainly dependent on the quantity of CO₂ dissolved into the product during storage and the storage temperature. More CO₂-gas dissolved into the product, gives more inhibition effect on the growth of microorganisms. To get maximum shelf life, the headspace of prior art MAP has to be three times the volume of the product itself. In the method of the present invention the final headspace of the packaging may be significantly less than in the prior art MAP, since a significant amount of the CO₂-gas is dissolved in the food product during storage in the cold-storage chamber.

For optimal shelf life enough CO₂-gas had to be dissolved into the meat. The quantity of dissolved gas increase with increased headspace, increased gas-pressure and decreased temperature.

In general there is a higher food security with MAP than with vacuum. By using vacuum the rest-O₂ % is decided after the growth of microorganisms.

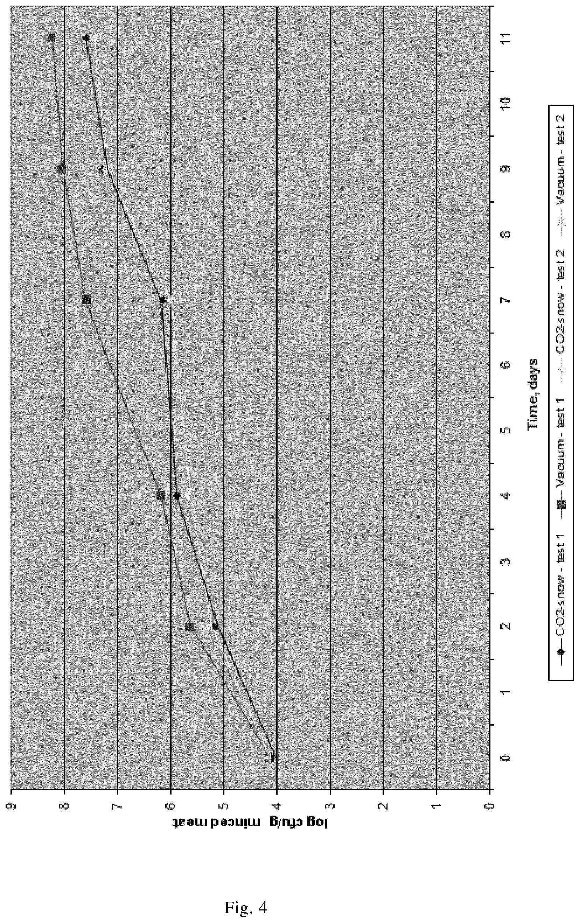

The results of total bacteria count in minced meat packed and stored according to the method according to the present invention compared to minced meat packed by a common vacuum packaging method, is displayed in fig. 4.

The test was not performed under optimal conditions since the production site is not a clean zone and the meat had been frozen and thawed. However, since the conditions were equal for both methods, the results clearly show the superior effect of the method according to the invention. The shelf life obtained in the test is shorter than the one expected under normal production of fresh raw material in clean rooms, but this applies to both methods.

The oxidation by O₂ has an effect on colour, fat, sensory properties, protein properties and nutrient value of the packaged product. To obtain long shelf life it is important to protect the product against O₂. The method according to the invention provides a maximum content of 0.01 % v/v O₂ in the packaging, which is the requirement for red meat. The low concentration of O₂ is needed to keep the dark red colour of meat. The pigment providing the red colour in meat is deoxymyoglobin. Such a low O₂ concentration is also necessary to reduce growth of microorganisms.

The reduced headspace of the final packaging compared to other MAP methods, gives 33 % more meat per transport unit compared with other MAP solutions. This will reduce transport costs per kg meat, since the transport is paid by volume and not by weight (cost reducing). In an exemplary embodiment of a MAP-packaging obtained by the method according to the invention, the volume of 400 g meat is 374 ml and the headspace after three days is 167 ml, 541 ml in total. In other words, the headspace volume is about 45 % of the volume of the food product, or about 31 % of the total volume of the packaging. In present MAP solutions/methods the total package volume, for a corresponding volume of food product, is about 956 ml. That is, in a MAP-packaging obtained by a prior art method, the headspace volume is about 150 % of the volume of the food product, or about 60 % of the total volume of the packaging.

Contrary to known MAP methods, it was discovered that the use of dry ice snow makes it problematic to control the heat sealing temperature required to obtain a homogenous and gas impermeable tear seal. The problem was caused by dry ice snow cooling down the weld area (i.e. the heat sealing section) of the packaging in a non-homogenous manner.

The above problem was discovered when experiments surprisingly showed that a polymer composite film comprising polyamide, EVOH and polyethylene (OPALEN HB 55 AF, manufactured by Bemis) having a heat sealing temperature range of 20 °C (i.e. heat sealing occurs from 120 to 140 °C) was not able to provide a consistent and gas impermeable sealing since the presence of dry ice snow provided weld areas experiencing temperatures below the required seal temperature.

It was hypothesized that use of a polymer film having a wide seal temperature range would be more suited, and use of a similar composite film, also comprising polyamide, EVOH and polyethylene (COMBITHERM XX 80, manufactured by Wipak), but having a heat sealing temperature range of 50 °C (i.e. sealing occurs from 130 to 180 °C), did provide the desired consistent sealing.

It is impossible to increase or reduce the sealing-time to the packaging machine during the packaging process to control the seal formation.

Consequently, to obtain a reproducible and consistent sealing it is necessary that at least the heat sealing section of the MAP comprises a polymer film having a sufficiently wide/broad heat sealing temperature range. Based on the experiments, the heat sealing temperature range must be at least 25 °C.

Further, to manage the large temporary volume expansion of the packaging and the consequent stretching, at least the part of the MAP comprising a fully flexible polymer film, for instance the lid 1 or the bag 9 and sleeve, should have a thickness of at least 65 µm, and preferably at least 80 µm.

To summarize, the present invention provides a time and cost-efficient packaging method having at least the following advantages; large amounts of CO₂ which provides protection against microorganism is absorbed in the food product, and the food product is surrounded by a modified atmosphere having a minimal amount of O₂. Further, the packaging requires less headspace than those obtained by known MAP-methods, and thus provides savings related to the required amount of packaging material for a given amount of food product, transportation costs, storage space required etc.

## Claims

1. A modified atmosphere packaging method, comprising the steps of:
a) providing a modified atmosphere packaging (1,5,9) made in a gas impermeable material, the packaging is heat sealable at a heat sealing section and comprises at least one one-way valve (6) for allowing gas to escape the packaging, wherein at least the heat seal section comprises a heat sealable polymer film having a sealing temperature range of at least 25 °C;
b) adding dry ice snow (4) and a food product (2) to the modified atmosphere packaging (6), wherein the particles of the dry ice snow have a mass median diameter of less than 1 mm;
c) evacuating gas from the modified atmosphere packaging (1,5,9) before heat sealing;
d) heat sealing the modified atmosphere packaging at the heat sealing section; and
e) allowing excess CO₂-gas to be vented through the at least one one-way valve (6) after the modified atmosphere packaging has been heat sealed.

2. The packaging method according to claim 1, wherein at least the heat seal section comprises a heat sealable polymer film having a sealing temperature range of at least 35 °C and preferably at least 45 °C.

3. The packaging method according to claim 1 or 2, wherein the gas impermeable material comprises a heat sealable polymer film having a sealing temperature range of at least 25 °C, at least 35 °C or at least 45 °C.

4. The packaging method according to any of the claims 1-3, wherein at least parts of the gas impermeable material is a heat sealable polymer film having a thickness of at least 65 µm.

5. The packaging method according to any of the preceding claims, wherein the food product (2) is added to the modified atmosphere packaging before or after the dry ice snow (4).

6. The packaging method according to any of the preceding claims, wherein the modified atmosphere packaging comprises a bottom part (1) and a top part (5).

7. The packaging method according to claim 6, wherein step a) entails a step of first providing the bottom part (1) before step b) and a step of adding the top part (5) to the bottom part (1) after step b) or c).

8. The packaging method according to any of claims 1-7, wherein the modified atmosphere packaging comprises a sealable bag (9) or sleeve.

9. The packaging method according to any of the preceding claims, wherein the sealed modified atmosphere packaging has a headspace volume less than 50 % of the volume of the food product, when excess CO₂ gas has been vented through the at least one one-way valve and/or absorbed into the food product, preferably the headspace volume is less than 40 %, and even more preferred less than 30 %.

10. The packaging method according to any of the preceding claims, wherein step c) and d) is performed in a vacuum chamber.

11. The packaging method according to any of the preceding claims, wherein the at least one one-way valve opens and allows gas to escape the modified atmosphere packaging when an internal pressure of the packaging exceeds a given pressure limit, the pressure limit is preferably in the range of 1.5 mbar to 5.0 mbar above the ambient pressure.

## Patentansprüche

1. Verfahren zum Verpacken unter modifizierter Atmosphäre, das die folgenden Schritte umfasst:
a) das Bereitstellen einer Verpackung unter modifizierter Atmosphäre (1,5,9), die aus einem gasundurchlässigen Material hergestellt ist, wobei die Verpackung an einem Heißsiegelabschnitt heißsiegelfähig ist und mindestens ein Rückschlagventil (6) umfasst, um Gas aus der Verpackung austreten zu lassen, wobei zumindest der Heißsiegelabschnitt eine heißsiegelfähige Polymerfolie mit einem Siegeltemperaturbereich von mindestens 25 °C umfasst;
b) die Zugabe von Trockeneisschnee (4) und einem Lebensmittelprodukt (2) zu der Verpackung unter modifizierter Atmosphäre (6), wobei die Partikel des Trockeneisschnees einen massebezogenen mittleren Durchmesser von weniger als 1 mm aufweisen;
c) das Ausleiten von Gas aus der Verpackung unter modifizierter Atmosphäre (1,5,9) vor dem Heißsiegeln;
d) das Heißsiegeln der Verpackung unter modifizierter Atmosphäre an dem Heißsiegelabschnitt; und
e) das Zulassen, dass überschüssiges CO₂-Gas durch das mindestens eine Rückschlagventil (6) entlüftet wird, nachdem die Verpackung unter modifizierter Atmosphäre heißgesiegelt wurde.

2. Verpackungsverfahren nach Anspruch 1, wobei zumindest der Heißsiegelabschnitt eine heißsiegelfähige Polymerfolie mit einem Siegeltemperaturbereich von mindestens 35 °C und vorzugsweise mindestens 45 °C aufweist.

3. Verpackungsverfahren nach Anspruch 1 oder 2, wobei das gasundurchlässige Material eine heißsiegelfähige Polymerfolie mit einem Siegeltemperaturbereich von mindestens 25 °C, mindestens 35 °C oder mindestens 45 °C umfasst.

4. Verpackungsverfahren nach einem der Ansprüche 1-3, wobei das gasundurchlässige Material zumindest teilweise eine heißsiegelfähige Polymerfolie mit einer Dicke von mindestens 65 µm ist.

5. Verpackungsverfahren nach einem der vorhergehenden Ansprüche, wobei das Lebensmittelprodukt (2) vor oder nach dem Trockeneisschnee (4) zu der Verpackung unter modifizierter Atmosphäre zugegeben wird.

6. Verpackungsverfahren nach einem der vorhergehenden Ansprüche, wobei die Verpackung unter modifizierter Atmosphäre ein unteres Teil (1) und ein oberes Teil (5) umfasst.

7. Verpackungsverfahren nach Anspruch 6, wobei Schritt a) Folgendes umfasst: zuerst einen Schritt der Bereitstellung des unteren Teils (1) vor Schritt b), und einen Schritt des Hinzufügens des oberen Teils (5) zu dem unteren Teil (1) nach Schritt b) oder c).

8. Verpackungsverfahren nach einem der Ansprüche 1-7, wobei die Verpackung unter modifizierter Atmosphäre eine(n) siegelfähige(n) Beutel (9) oder Hülle umfasst.

9. Verpackungsverfahren nach einem der vorhergehenden Ansprüche, wobei die gesiegelte Verpackung unter modifizierter Atmosphäre ein Gasraumvolumen von weniger als 50 % des Volumens des Lebensmittelprodukts aufweist, wenn das überschüssige CO₂-Gas durch das mindestens eine Rückschlagventil abgelassen wurde und/oder in das Lebensmittelprodukt absorbiert wurde; vorzugsweise ist das Gasraumvolumen kleiner als 40 %, und noch mehr bevorzugt kleiner als 30 %.

10. Verpackungsverfahren nach einem der vorhergehenden Ansprüche, wobei die Schritte c) und d) in einer Vakuumkammer ausgeführt werden.

11. Verpackungsverfahren nach einem der vorhergehenden Ansprüche, wobei das mindestens eine Rückschlagventil sich öffnet und das Austreten von Gas aus der Verpackung unter modifizierter Atmosphäre ermöglicht, wenn ein Innendruck der Verpackung einen vorgegebenen Druckgrenzwert überschreitet; der Druckgrenzwert liegt vorzugsweise im Bereich von 1,5 hPa bis 5,0 hPa (1,5 mbar bis 5,0 mbar) über dem Umgebungsdruck.

## Revendications

1. Procédé d'emballage sous atmosphère modifiée, comprenant les étapes consistant à :
a) fournir un emballage à atmosphère modifiée (1,5,9) fabriqué dans un matériau imperméable aux gaz, l'emballage est thermoscellable au niveau d'une section de thermoscellage et comprend au moins une soupape unidirectionnelle (6) pour permettre à un gaz de s'échapper de l'emballage, dans lequel au moins la section de thermoscellage comprend un film polymère thermoscellable ayant une plage de température de scellage d'au moins 25 °C ;
b) ajouter de la neige carbonique (4) et un produit alimentaire (2) à l'emballage à atmosphère modifiée (6), dans lequel les particules de la neige carbonique ont un diamètre médian massique inférieur à 1 mm ;
c) évacuer le gaz de l'emballage à atmosphère modifiée (1,5,9) avant thermoscellage ;
d) thermosceller l'emballage à atmosphère modifiée au niveau de la section de thermoscellage ; et
e) permettre au CO₂ gazeux en excès d'être mis à l'air libre par l'intermédiaire de l'au moins une soupape unidirectionnelle (6) après que l'emballage à atmosphère modifiée a été thermoscellé.

2. Procédé d'emballage selon la revendication 1, dans lequel au moins la section de thermoscellage comprend un film polymère thermoscellable ayant une plage de température de scellage d'au moins 35 °C et de préférence d'au moins 45 °C.

3. Procédé d'emballage selon la revendication 1 ou 2, dans lequel le matériau imperméable aux gaz comprend un film polymère thermoscellable ayant une plage de température de scellage d'au moins 25 °C, d'au moins 35 °C ou d'au moins 45 °C.

4. Procédé d'emballage selon l'une quelconque des revendications 1 à 3, dans lequel au moins des parties du matériau imperméable aux gaz sont un film polymère thermoscellable ayant une épaisseur d'au moins 65 µm .

5. Procédé d'emballage selon l'une quelconque des revendications précédentes, dans lequel le produit alimentaire (2) est ajouté à l'emballage à atmosphère modifiée avant ou après la neige carbonique (4).

6. Procédé d'emballage selon l'une quelconque des revendications précédentes, dans lequel l'emballage à atmosphère modifiée comprend une partie inférieure (1) et une partie supérieure (5).

7. Procédé d'emballage selon la revendication 6, dans lequel l'étape a) impose une étape consistant à fournir d'abord la partie inférieure (1) avant l'étape b) et une étape consistant à ajouter la partie supérieure (5) à la partie inférieure (1) après l'étape b) ou c).

8. Procédé d'emballage selon l'une quelconque des revendications 1 à 7, dans lequel l'emballage à atmosphère modifiée comprend un sachet (9) ou manchon scellable.

9. Procédé d'emballage selon l'une quelconque des revendications précédentes, dans lequel l'emballage à atmosphère modifiée scellé a un volume d'espace de tête inférieur à 50 % du volume du produit alimentaire, lorsque le CO₂ gazeux en excès a été mis à l'air libre par l'intermédiaire de l'au moins une soupape unidirectionnelle et/ou absorbé dans le produit alimentaire, de préférence le volume d'espace de tête est inférieur à 40 %, et même plus préférablement inférieur à 30 %.

10. Procédé d'emballage selon l'une quelconque des revendications précédentes, dans lequel l'étape c) et d) est effectuée dans une chambre à vide.

11. Procédé d'emballage selon l'une quelconque des revendications précédentes, dans lequel l'au moins une soupape unidirectionnelle s'ouvre et permet à un gaz de s'échapper de l'emballage à atmosphère modifiée lorsqu'une pression interne de l'emballage dépasse une limite de pression donnée, la limite de pression est de préférence dans la plage de 1,5 hPa à 5,0 hPa (1,5 mbar à 5,0 mbar) au-dessus de la pression ambiante.
